# FASCICULE DE BREVET EUROPEEN

(11) **EP 3 709 049 B1**
(45) Date de publication et mention de la délivrance du brevet: **23.06.2021**
(21) Numéro de dépôt: 20162700.7
(22) Date de dépôt: 12.03.2020
(51) Int. Cl.: G01S 7/41, G01S 13/72

(54) **SYSTEME DE TRAITEMENT RADAR ET PROCEDE DE DEBRUITAGE ASSOCIE**
RADARDATEN-VERARBEITUNGSSYSTEM UND ENTSPRECHENDES VERFAHREN ZUR GERÄUSCHDÄMPFUNG
RADAR PROCESSING SYSTEM AND RELATED NOISE REDUCTION METHOD

(30) Priorité: 13.03.2019 FR 1902551
(43) Date de publication de la demande: 16.09.2020
(73) Titulaire: Thales, 92400 Courbevoie (FR)
(72) Inventeur: LEGRAND, Léo, 33700 MERIGNAC (FR); MAGNANT, Clément, 33700 MERIGNAC (FR); GARREC, Patrick, 33700 MERIGNAC (FR)
(74) Mandataire: Lavoix

(56) Documents cités:
- WO-A1-2018/136144
- US-A- 5 210 798
- US-A1- 2018 164 406

## Description

L'invention a pour domaine celui des systèmes de traitement radar intégrant une chaîne de détection et une chaîne de pistage.

L'invention vise plus particulièrement la détection et le pistage de petites cibles, c'est-à-dire des cibles présentant une faible Surface Equivalente Radar - SER.

De manière classique, un système de traitement radar se décompose en deux blocs de traitement : une unité de traitement de détection, qui produit des détections du signal radar délivré par l'électronique d'acquisition associée à l'antenne radar ; et une unité de traitement de pistage, qui produit des objets d'intérêt ou pistes à partir des détections.

L'unité de traitement de détection inclut des traitements d'extraction utilisant une fonction de seuillage de l'intensité du signal radar. Le seuil de cette fonction dépend du taux de fausses alarmes souhaité par l'opérateur. Le choix d'un taux de fausses alarmes induit le niveau du seuil de détection, qui à son tour induit la probabilité de détection pour une SER donnée.

Les cibles de faible SER présentent souvent un intérêt opérationnel, par exemple dans le cadre de la surveillance maritime. Pour ce genre de cible, il est nécessaire d'améliorer les performances de la chaîne de détection, de manière à maximiser la probabilité de détection de cibles réelles, tout en minimisant le taux de fausses alarmes.

Il est alors connu de mettre en œuvre des traitements intermédiaires entre l'unité de traitement de détection et l'unité de traitement de pistage, autorisant l'abaissement du niveau du seuil de détection, en permettant de discriminer entre les détections correspondant à de fausses alarmes et celles correspondant à de vraies cibles. Les détections ainsi filtrées sont ensuite transmises en entrée de l'unité de traitement de pistage.

Pour ces traitements intermédiaires, deux approches sont couramment mises en œuvre. La première approche, dite d'intégration tout à tour - ITT, consiste à intégrer, sur une pluralité de balayages successifs, les signaux radar de manière à réaliser un filtrage des détections en se fondant sur l'existence d'une cohérence temporelle.

La seconde approche, dite de pistage avant détection -TBD (« Track Before Detect »), consiste à réaliser un pistage avant la détection de manière à exploiter la cohérence cinématique des signaux radar provenant d'une même cible. Plus précisément, cette seconde approche exploite la cohérence cinématique en testant si les mesures de position, vitesse et/ou accélération déduites des signaux radar et associées à une détection sont cohérentes d'un point de vue cinématique.

La première approche ITT permet de limiter le nombre de détections en entrée de l'unité de traitement de pistage. Ceci permet incidemment de limiter le coût calculatoire en aval de ce traitement intermédiaire. Cependant, cette première approche ne tire pas profit des informations sur la cinématique de la cible, ce qui impose une réduction du temps d'intégration, la cohérence temporelle étant perdue au-delà de ce temps caractéristique.

Dans la seconde approche TBD, la cohérence cinématique des cibles potentielles étant prise en compte, le filtrage peut s'effectuer sur un horizon temporel plus grand qu'avec la première approche. Cependant, cette seconde approche présente un coût calculatoire élevé. Elle présente de plus la difficulté de devoir modéliser le mouvement des cibles a priori. Il faut que cette modélisation soit à la fois suffisamment contraignante pour éliminer un maximum de fausses alarmes, mais en même temps assez ouverte pour ne pas éliminer le cas de cibles manœuvrantes.

Finalement, cette seconde approche TBD n'est pas adaptée aux situations caractérisées par un environnement dense en fausses alarmes et/ou en petites cibles, notamment manœuvrantes.

Par ailleurs, le document US 5 210 198 A divulgue un module de détection amélioré dans une chaîne de traitement et de pistage radar. Lorsque le rapport signal sur bruit est faible, plutôt que de réaliser une opération de seuillage d'une cartographie d'échantillons, ce document propose d'intégrer temporellement une pluralité de cartographies d'échantillons en utilisant un réseau vectoriel de neurones, dont la sortie est constituée par des détections, qui peuvent ensuite être appliquées en entrée d'une unité de pistage.

Dans le document WO 2018/136144 A1, une séparation des sources dans un signal électromagnétique de mélange est effectuée en considérant un historique des « spectrogrammes » mesurés.

Le document US 2018/164406 A1 divulgue une chaine de pistage radar comportant notamment un module de détermination de la probabilité de présence de cible, un module de suivi de la probabilité à travers une pluralité de cartographies de probabilité et un module de pistage.

L'invention a donc pour but de répondre au besoin précité en proposant notamment un traitement intermédiaire, dit de « débruitage », permettant de discriminer les détections issues de fausses alarmes des détections issues de cibles potentielles.

Pour ce faire l'invention a pour objet un système de traitement radar et un procédé de débruitage selon les revendications annexées.

L'invention et ses avantages seront mieux compris à la lecture de la description détaillée qui va suivre d'un mode de réalisation particulier, donnée uniquement à titre d'exemple non limitatif, cette description étant faite en se référant aux dessins annexés, sur lesquels :
- la figure 1 est une représentation sous forme de blocs d'un système de traitement radar incluant une unité intermédiaire de débruitage ;
- la figure 2 illustre le procédé de structuration des données mise en œuvre par un module de structuration des données de l'unité de débruitage permettant d'obtenir un tenseur d'entrée ;
- la figure 3 est une représentation sous forme de blocs d'un auto-encodeur convolutif de l'unité de débruitage ;
- la figure 4 est une représentation du procédé mis en œuvre par un module de nettoyage de l'unité de débruitage ; et,
- la figure 5 est une représentation schématique de la phase d'apprentissage de l'auto-encodeur convolutif.

La présente invention se propose de mettre en œuvre, par une unité intermédiaire entre l'unité de traitement de détection et celle de pistage, un procédé de débruitage permettant de nettoyer tout ou partie des détections en sortie de l'unité de traitement de détection, des détections correspondant à des fausses alarmes. Ce procédé de débruitage est fondé sur un algorithme d'apprentissage profond (« Deep Learning » en anglais) permettant de discriminer entre les détections qui correspondent à des cibles réelles et celles qui correspondent à des fausses alarmes en vérifiant leur appartenance à différentes classes, chaque classe correspondant à une cinématique caractéristique. L'algorithme est entrainé sur des données radar réelles afin de déterminer les valeurs des paramètres de définition de ces classes. Une fois configuré, le procédé de débruitage est utilisé en temps réel sur les signaux radar.

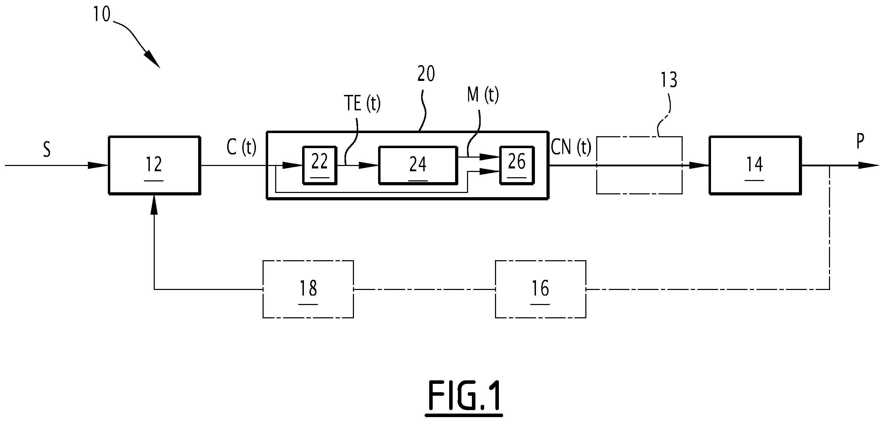

La figure 1 représente un système de traitement radar 10.

Le système 10 est un dispositif électronique programmé comportant un moyen de calcul et un moyen de mémorisation. Ce dernier stocke notamment les instructions de programmes informatiques propres à être exécutés par le moyen de calcul. Sur la figure 1, ces programmes sont représentés schématiquement par différentes unités.

Le système 10 reçoit en entrée le signal radar S, tel que délivré par l'électronique d'acquisition d'une antenne radar associée au système 10, et délivre en sorite des pistes P, dont une représentation graphique affichée sur un écran de contrôle peut par exemple permettre à un opérateur de réaliser une tâche de surveillance de la zone observée par l'antenne radar.

De manière conventionnelle, le système 10 comporte, en amont, une unité 12 de traitement de détection et, en aval, une unité 14 de traitement de pistage. Ces unités sont similaires à celles de l'état de la technique et connues de l'homme du métier.

L'unité 12 est propre, à partir du signal radar S, à délivrer en sortie une cartographie de détection C. Une cartographie de détection est indexée par un paramètre temporel T. Ainsi, la carte de détection à l'instant courant t est notée C(t).

L'unité 14 est propre, à partir d'une cartographie de détection à l'instant courant, à délivrer en sortie, une ou plusieurs pistes P.

Entre les unités 12 et 14, le système 10 comporte une unité intermédiaire de débruitage 20 propre à mettre en œuvre un traitement intermédiaire de nettoyage sur la cartographie à l'instant courant, C(t), qui est une cartographie bruitée, pour obtenir une cartographie de détection débruitée à l'instant courant, CN(t), propre à être appliquée en entrée de l'unité 14.

En variante, le système 10 peut comporter d'autres unités intermédiaires mettant en œuvre d'autres traitements intermédiaires connus de l'homme du métier. Par exemple et de préférence, le système 10 comporte une unité intermédiaire TBD 13 propre à mettre en œuvre un traitement intermédiaire du type pistage avant détection. L'unité 13, facultative, est représentée en traits pointillés sur la figure 1.

Avantageusement, mais cela n'est pas nécessaire, le système 10 comporte une boucle de rétroaction permettant d'adapter dynamiquement le seuil de détection utilisé par l'unité 12, en fonction des pistes P en sortie de l'unité 14. Cette boucle de rétroaction comporte par exemple une unité 16 d'extraction du nombre de pistes, suivie d'une unité 18 de calcul d'un seuil de détection adapté. Ces unités, facultatives, sont représentées en traits pointillés sur la figure 1. Une telle boucle de rétroaction est également connue de l'homme du métier.

L'unité intermédiaire de débruitage 20 comporte successivement un module de structuration des données 22, un module 24 dit auto-encodeur convolutif, et un module de nettoyage 26.

Le module de structuration des données 22 est propre à prendre en entrée une pluralité de cartographies de détections C à des instants successifs afin de construire un tenseur d'entrée TE.

L'auto-encodeur convolutif 24 est propre à prendre en entrée un tenseur d'entrée TE et à générer en sortie une carte de détection M.

Enfin, le module de nettoyage 26 est propre à prendre en entrée une carte de détection M et une cartographie de détection C pour générer en sortie une cartographie de détection débruitée CN.

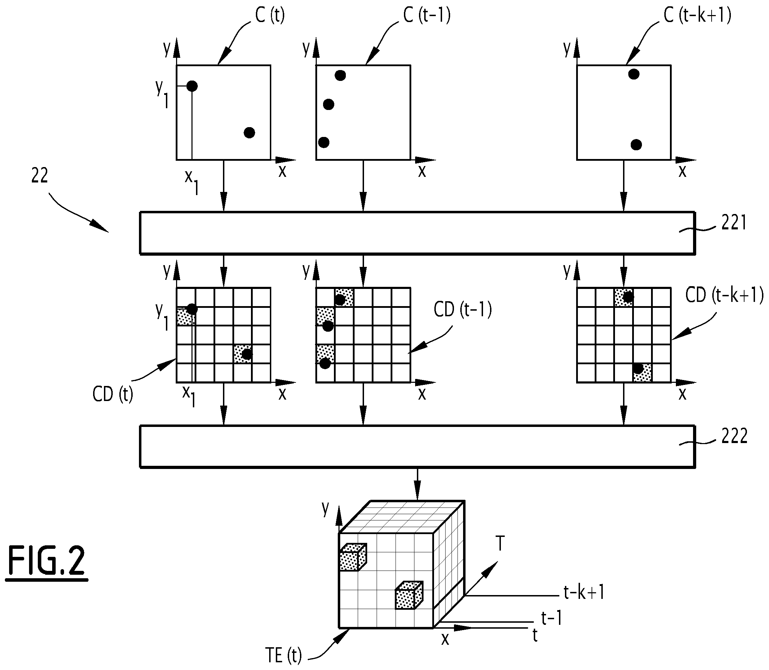

En se référant à la figure 2, le procédé de structuration des données mis en œuvre lors de l'exécution du module de structuration des données 22 va être présenté plus en détail.

Dans le mode de réalisation présenté, une cartographie de détection C est une représentation à deux dimensions, chacune des dimensions correspondant à une mesure réalisée par l'unité 12 à partir du signal radar S.

Par exemple, la première dimension peut correspondre à la distance mesurée entre l'antenne radar et une détection, tandis que la seconde dimension peut correspondre à une grandeur angulaire (azimut et/ou site) entre une direction de référence et une direction entre l'antenne radar et une détection.

En variante, d'autres dimensions peuvent être utilisées, telles que par exemple la vitesse radiale relative entre l'antenne radar et une détection ou encore la phase du signal reçu, lorsque des informations associées à l'effet Doppler sont disponibles dans le signal radar S.

De manière plus générale, toute mesure reliée à une variable cinématique d'une détection (position, vitesse ou accélération) peut être exploitée, notamment au moyen de cartographies de détection de dimensionnalité supérieure à deux.

Dans la suite et pour des raisons de clarté de l'exposé, on se limite au cas de cartographies de détection à deux dimensions, la première dimension étant notée x et la seconde dimension étant notée y.

Une cartographie de détection est une représentation sensiblement continue selon ses deux dimensions, c'est-à-dire que le nombre d'échantillons selon la première dimension x et la seconde dimension y sont grands par rapport au nombre de pixels introduits dans l'opération de discrétisation allant maintenant être présentée.

Une cartographie de détection est obtenue à chaque instant d'échantillonnage. Une cartographie de détection est donc étiquetée avec un instant selon la dimension temporelle T.

La première étape 221, mise en œuvre par le module de structuration des données 22, consiste à discrétiser l'espace de détection. Pour ce faire, la première dimension x est subdivisée en Lₓ intervalles, tandis que la seconde dimension y est subdivisée en L_{y} intervalles.

Un pixel est alors défini comme une zone de l'espace de détection située à l'intérieur d'un intervalle élémentaire selon la première dimension x et d'un intervalle élémentaire selon la seconde dimension y.

Par exemple, les entiers Lₓ et L_{y} sont choisis égaux à 100.

Une valeur est ensuite attribuée à chaque pixel : la valeur unité lorsqu'il existe au moins une détection à l'intérieur de ce pixel dans la cartographie de détection correspondante ; à défaut la valeur nulle est attribuée au pixel.

Par exemple, la détection de coordonnées (x₁, y₁) sur la cartographie C(t) conduit à attribuer la valeur unité au pixel de la cartes de détection CD(t) à l'intérieur duquel se trouve le point de coordonnées (x₁, y₁).

Cette opération de discrétisation 221 est réalisée sur k cartographies de détection se suivant temporellement, c'est-à-dire sur la pluralité de cartographies comportant la cartographie à l'instant courant t, C(t), et les k-1 cartographies aux instants précédents t-1,... , t-k+1, c'est-à-dire C(t-1), ... , C(t-k+1). Il en résulte k cartes de détection discrétisées, CD(t-1), ... , CD(t-k+1).

L'entier k est par exemple choisi égal à 5.

La seconde étape 222 consiste ensuite à associer, selon la dimension temporelle T, les k cartes discrétisées ainsi obtenues pour former le tenseur d'entrée à l'instant courant TE(t). Les cartes de détection discrétisées CD(t) à CD(t-k+1) sont empilées selon la dimension temporelle T. Le tenseur d'entrée TE est une matrice à trois dimensions, selon la première dimension x, la seconde dimension y et la dimension temporelle T. Le tenseur d'entrée TE comporte ainsi Lₓ x L_{y} x k pixels.

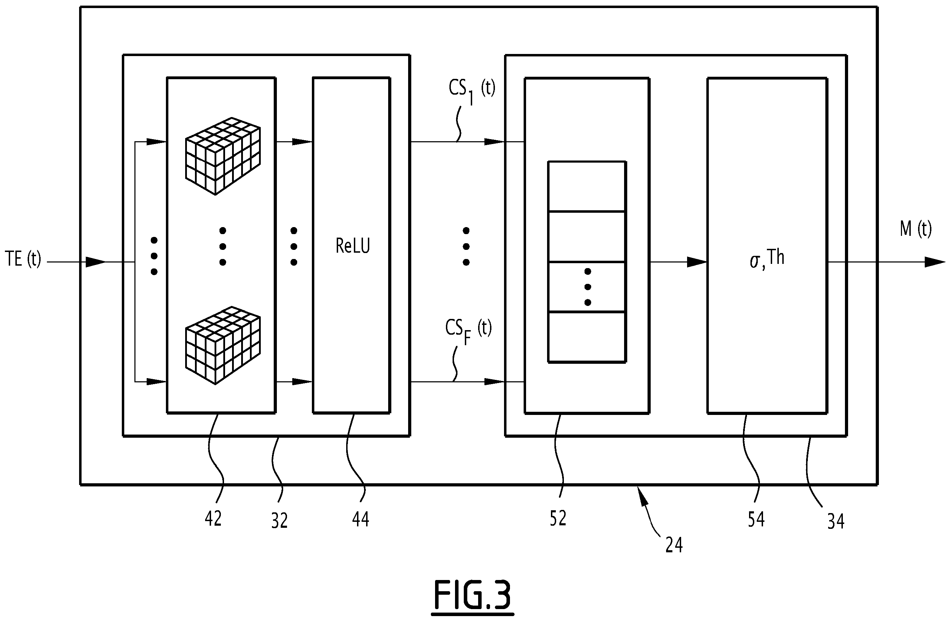

En se reportant à la figure 3, la structure de l'auto-encodeur convolutif 24 va être présentée plus en détail.

De manière générale, un auto-encodeur est un algorithme du type réseau de neurones artificiels pour l'apprentissage, supervisé ou non supervisé, de caractéristiques discriminantes.

Que cet auto-encodeur soit dit convolutif signifie qu'il met en œuvre un réseau de neurones convolutifs ou réseau de neurones à convolution (en anglais CNN ou ConvNet pour « Convolutional Neural Networks ») qui est un type de réseau de neurones artificiels qui se compose d'une succession de couches de neurones comportant au moins une couche de convolution.

Ainsi, dans le mode de réalisation illustré sur la figure 2, l'auto encodeur convolutif 24 comporte une première couche de neurones 32 et une seconde couche de neurones.

La première couche de neurones 32 comporte un bloc de filtrage 42 qui met en œuvre F filtres convolutifs de taille Fₓ × F_{y} × k. L'entier F est par exemple égal à 5. Les entiers Fₓ et F_{y} sont choisis égaux par exemple à 3.

Chaque filtre est utilisé pour une opération de convolution sur le tenseur d'entrée TE(t). De manière connue en soi, la convolution consiste à réaliser le produit matriciel du filtre avec une portion du tenseur d'entrée qui présente une taille identique à celle du filtre et est centrée sur un pixel, puis à affecter le résultat de ce produit au pixel correspondant de la carte de signature.

Chaque filtre convolutif met en œuvre Fₓ × F_{y} × k paramètres ajustables. Chaque filtre a pour fonction, une fois convenablement paramétré, d'identifier dans le tenseur d'entrée la signature cinématique d'un type de détection réelle particulier. Le but de l'étape d'apprentissage sera alors de déterminer les valeurs optimales de ces paramètres.

La première couche 32 comporte ensuite un bloc d'activation 44 qui, pour chaque filtre, applique une fonction d'activation sur le résultat de l'opération de convolution de ce filtre de convolution avec le tenseur d'entrée TE(t). Est par exemple utilisée la fonction ReLU classiquement utilisée pour les filtres convolutifs.

F cartes de signature CSᵢ(t) (indexées par l'entier i entre 1 et F) sont obtenues en sortie de la première couche 32.

Il est à noter que la convolution réduit la dimensionnalité selon la direction temporelle, le filtre ayant la même taille que le tenseur d'entrée selon la dimension temporelle k. Une carte de signature a donc une taille Lₓ × L_{y}, identique à celle d'une carte de détection.

La possibilité de rajouter des éléments valant zéro (« padding ») est avantageusement mise en œuvre à la fin du traitement réalisée par la première couche 42 de manière à garantir qu'une carte de signature présente la taille requise.

La seconde couche de neurones 34 comporte un bloc de superposition 52 mettant en œuvre un unique filtre de combinaison de taille 1 × 1 × F, qui réalise une combinaison des F cartes de signatures. Le but de l'étape d'apprentissage sera de déterminer également les valeurs optimales des F paramètres de ce filtre de combinaison.

La seconde couche de neurones 34 comporte ensuite un bloc d'activation 54, qui applique une fonction d'activation sur le résultat de l'opération de combinaison du filtre de combinaison sur les F cartes de signatures. La fonction d'activation est ici de préférence la fonction « sigmoïde ». La fonction « sigmoïde » permet d'avoir en sortie des valeurs de pixel allant de 0 à 1, ces valeurs extrêmes caractérisant respectivement une absence de détection et une détection de cible.

Un seuillage est ensuite effectué. Une valeur seuil, noté Th, en dessous de laquelle il est considéré qu'aucune cible n'est présente, doit alors être choisie.

En sortie, est obtenue une carte de détection débruitée, M(t). Elle a une taille égale à Lₓ × L_{y}. La valeur d'un pixel vaut soit 0, soit 1. Elle correspond aux zones de la cartographie initiale C(t) où se trouve une détection dont la cohérence cinématique a été reconnue.

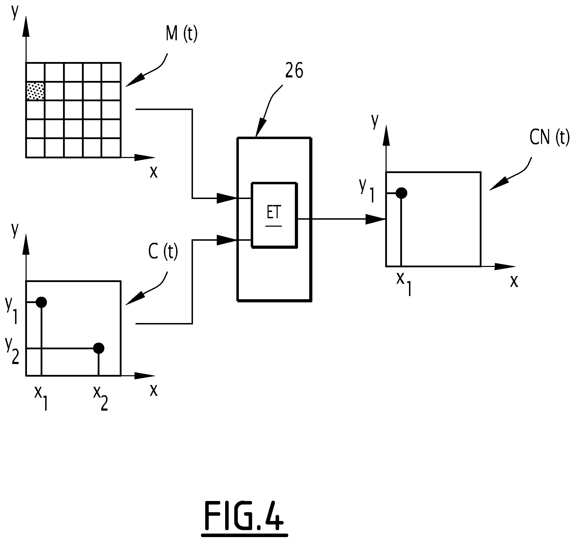

Comme illustré à la figure 4, l'unité de nettoyage 26 réalise ensuite une combinaison logique de la carte de détection débruitée à l'instant courant, M(t), avec la cartographie de détection à l'instant courant, C(t). Il s'agit par exemple d'un ET logique qui permet de ne conserver les détections de la cartographie C(t) qui sont situées à l'intérieur d'une zone de valeur unité de la carte M(t). Cette dernière est donc utilisée comme un masque.

Ainsi, la détection (x₁, y₁) de la cartographie C(t) qui tombe dans un pixel de la carte M(t) ayant une valeur unité est conservée dans la cartographie débruitée CN(t), alors que la détection (x₂, y₂) de la cartographie C(t) qui tombe dans un pixel de la carte M(t) ayant une valeur nulle est éliminée. La détection (x₁, y₁) correspond avec une grande probabilité à une cible réelle, tandis que la détection (x₂, y₂) correspond avec une grande probabilité à une fausse alarme.

En sortie de cette unité 26 est ainsi obtenue une cartographie de détection débruitée CN(t). Il s'agit d'une représentation continue. Elle comporte presque exclusivement les détections qui correspondent à des cibles réelles. Cette cartographie nettoyée est ensuite transmise au module aval, en particulier le module de traitement de pistage 14.

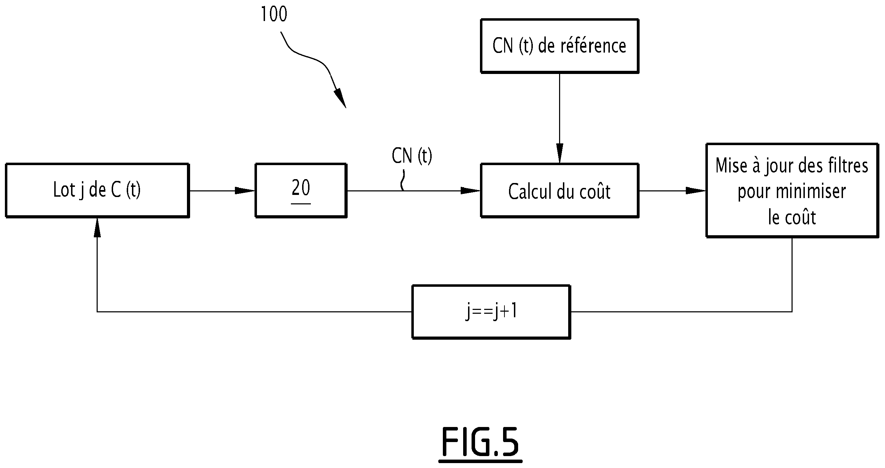

Sur la figure 5 est représenté le procédé d'apprentissage 100 permettant d'ajuster les paramètres de l'auto-encodeur convolutif 24.

Lors de cet apprentissage ou entraînement, un algorithme d'optimisation est mis en œuvre. Il s'agit par exemple de l'algorithme « Adadelta » connu de l'homme du métier. Il permet la mise à jour des poids des différents filtres au cours d'une procédure classique de descente du gradient d'une fonction de coût.

La fonction de coût utilisée est par exemple la fonction d'entropie croisée, qui permet de comparer une distribution avec une distribution de référence. Cet algorithme d'optimisation présente l'avantage d'être peu coûteux sur un plan calculatoire.

Des ensembles de cartographies de détections, C(t) à C(t-k+1), appartenant à un lot d'ensembles de cartographies, étiqueté par un indice j, sont appliqués en entrée de l'unité 20, afin d'obtenir des cartographies débruitées CN(t).

Les cartographies d'un ensemble de cartographies sont par exemple obtenues en sortie d'une unité de traitement de détection similaire à l'unité 12, lors d'une utilisation passée d'une antenne radar similaire à celle associée au système 10. Avantageusement, ces cartographies sont obtenues au cours de tests de détection faisant intervenir une cible de type connu, et à la cinématique connue.

Puis, la fonction de coût est calculée par comparaison avec des cartes nettoyées de référence. Ces cartes de référence correspondent aux cartographies de détections appliquées en entrée desquelles ont été supprimées les détections correspondant à des fausses alarmes et conservées les détections correspondant aux cibles utilisées lors du test.

Le calcul du gradient de cette fonction de coût permet de mettre à jour les valeurs des paramètres de l'auto-encodeur 24.

Le procédé d'apprentissage est réitéré pour le lot j suivant.

Il est à noter que la taille d'un lot influe sur la vitesse d'apprentissage. Choisir un lot de taille importante permet de s'assurer de la bonne mise à jour des poids, mais l'entraînement est alors plus long. Au contraire, un lot de petite taille risque d'entraîner la mise à jour des poids dans une direction incertaine. Cependant, cette imprécision peut être compensée par un plus grand nombre d'itérations du procédé de mise à jour des paramètres.

Le procédé de mise à jour des paramètres est itéré jusqu'à ce que la fonction de coût soit sensiblement constante d'une itération à l'autre, indiquant ainsi une convergence des paramètres.

Une fois les paramètres de l'auto-encodeur convolutifs 24 déterminés, l'auto-encodeur est utilisé pour le traitement en temps réel d'un signal radar réel.

Des tests réalisés avec le système 10 venant d'être présenté ont permis de quantifier ses bénéfices.

Ainsi pour un taux de fausses alarmes en entrée de 10⁻², un taux de fausses alarmes en sortie de l'ordre de 5.10⁻⁴ a été obtenu. Cette diminution du taux de fausses alarmes correspond au passage de 100 fausses alarmes en moyenne sur une cartographie de détection à 5 fausses alarmes en moyenne. Le taux de bonnes détections est proche de l'unité, ce qui signifie que le procédé de débruitage n'élimine pas les détections qui correspondent à des cibles réelles.

Lorsque des mesures de vitesse Doppler sont utilisées en plus des mesures de position, le procédé selon l'invention rejette encore davantage de fausses alarmes, grâce à une dimension de discrimination supplémentaire.

## Revendications

1. Système de traitement radar (10) comportant :
- une unité de traitement de détection (12), propre à produire, à partir d'un signal radar délivré par une antenne radar, une cartographie de détection ;
- au moins une unité de traitement intermédiaire, propre à produire, à partir de la cartographie de détection, une cartographie de détection traitée ; et,
- une unité de traitement de pistage (14), propre à produire, à partir de la cartographie de détection traitée, une ou plusieurs pistes,
le système étant **caractérisé en ce que** ladite au moins une unité de traitement intermédiaire est une unité intermédiaire de débruitage (20) propre à traiter une cartographie de détection à un instant courant pour obtenir une cartographie de détection débruitée à l'instant courant en tant que cartographie de détection traitée, l'unité intermédiaire de débruitage (20) comportant successivement :
- un module de structuration de données (22), propre à associer un tenseur d'entrée (TE(t)) à une pluralité de cartographies de détection comportant la cartographie de détection à l'instant courant (C(t)) et plusieurs cartographies de détection à des instants antérieurs à l'instant courant (C(t-1),... , C(t-k+1)) ;
- un auto-encodeur convolutif (24), propre à identifier, dans le tenseur d'entrée, des signatures caractéristiques de cibles réelles, et à produire en sortie une carte de détection débruitée (M(t)) ; et,
- un module de nettoyage (26) propre à filtrer la cartographie de détection à l'instant courant avec la carte de détection débruitée pour obtenir la carte de détection débruitée à l'instant courant (CN(t)),
et **en ce que** le module de structuration de données (22) est propre, pour chaque cartographie de détection (C(t), C(t-1), ..., C(t-k+1)) de la pluralité de cartographies de détection, à discrétiser ladite cartographie pour obtenir une carte de détection (CD(t), CD(t-1), ..., CD(t-k+1)), un pixel de la carte de détection prenant la valeur unité lorsque les coordonnées d'au moins une détection de la cartographie de détection se situent à l'intérieur dudit pixel, et la valeur nulle sinon ; et est propre à superposer, selon une dimension temporelle (T), la pluralité de cartes de détection ainsi obtenues pour construire le tenseur d'entrée (TE(t)).

2. Système selon la revendication 1 ou la revendication 1, dans lequel la pluralité de cartographies de détection comporte k cartographies de détection, k étant un entier entre 3 et 15, de préférence entre 4 et 10, notamment égal à 5.

3. Système selon l'une quelconque des revendications 1 à 2, dans lequel l'auto-encodeur convolutif (24) comporte :
une première couche de neurones (32) intégrant :
- un bloc de filtrage (42), qui met en œuvre une pluralité de filtres convolutifs, la pluralité de filtres convolutifs comportant F filtres convolutifs, F étant un entier entre 4 et 64, de préférence entre 8 et 32, notamment égal à 16 ; et,
- un bloc d'activation, qui met de préférence en œuvre la fonction d'activation ReLU, pour générer une pluralité de cartes de signatures (CS₁(t), ... CS_{F}(t)), ladite pluralité de cartes de signature comportant F cartes de signature, et,
une seconde couche de neurones (34) intégrant :
- un bloc de superposition (52), qui met en œuvre une filtre de combinaison permettant de combiner la pluralité de cartes de signature ; et,
- un bloc d'activation (54), qui met de préférence en œuvre la fonction d'activation « sigmoïde »,
pour générer la carte de détection débruitée (M(t)).

4. Système selon la revendication 3, dans lequel les différents filtres convolutifs de la pluralité de filtres convolutifs présentent une taille identique, la longueur d'un filtre convolutif selon la dimension temporelle (T) étant égale à la longueur du tenseur d'entrée (TE(t)) selon la dimension temporelle, de sorte qu'une carte de signature (CS₁(t), ... CS_{F}(t)) présente la dimensionnalité d'une carte de détection (C(t), ... C(t-k+1)).

5. Système selon l'une quelconque des revendications 1 à 4, dans lequel l'unité de nettoyage (26) réalise une combinaison logique de la cartographie de détection à l'instant courant (C(t)) avec la carte de détection débruitée (M(t)) dérivée de la cartographie de détection à l'instant courant (C(t)), pour obtenir la cartographie de détection débruitée (CN(t)).

6. Système selon l'une quelconque des revendications 1 à 5, dans lequel une cartographie de détection comporte au moins une dimension correspondant à : une distance, un angle, une vitesse radiale relative, une phase du signal radar ou tout autre mesure d'un état cinématique d'une cible, c'est-à-dire reliée aux coordonnées de position, de vitesse ou d'accélération de ladite cible.

7. Système selon l'une quelconque des revendications 1 à 6, comportant une boucle de rétroaction permettant d'adapter dynamiquement un seuil de détection de l'unité de traitement de détection (12) à partir des pistes en sortie de l'unité de traitement de pistage (16).

8. Système selon l'une quelconque des revendications 1 à 7, **caractérisé en ce qu'**au moins l'unité de traitement de débruitage (20) résulte de la programmation adaptée d'un ordinateur.

9. Procédé de débruitage d'une cartographie de détection à l'instant courant (C(t)), ledit procédé étant mis en œuvre par un système de traitement radar (10) selon l'une quelconque des revendications 1 à 8, la cartographie de détection à l'instant courant (C(t)) étant produite par une unité de traitement de détection (12) à partir d'un signal radar délivré par une antenne radar, le procédé comportant les étapes consistant à :
- associer, au moyen d'un module de structuration des données (22), un tenseur d'entrée (TE(t)) à une pluralité de cartographie de détection comportant la cartographie de détection à l'instant courant (C(t)) et plusieurs cartographies de détection à des instants antérieurs à l'instant courant (C(t-1),... , C(t-k+1)) ;
- identifier, au moyen d'un auto-encodeur convolutif (24), dans le tenseur d'entrée, des signatures caractéristiques de cibles réelles, et produire en sortie une carte de détection débruitée (M(t)) ; et,
- filtrer, au moyen d'un module de nettoyage (26), la cartographie de détection à l'instant courant (C(t)) avec la carte de détection débruitée (M(t)) pour obtenir une carte de détection débruitée (CN(t)), la carte de détection débruitée étant destinée à être appliquée en entrée d'une unité de traitement de pistage (14).

## Patentansprüche

1. Radarverarbeitungssystem (10), aufweisend:
- eine Detektionsverarbeitungseinheit (12), welche dazu geeignet ist, ein Detektionskennfeld aus einem durch ein Antennenradar gelieferten Radarsignal zu erzeugen,
- mindestens eine Zwischenverarbeitungseinheit, welche dazu geeignet ist, ausgehend von dem Detektionskennfeld ein bearbeitetes Detektionskennfeld zu erzeugen, und
- eine Verfolgungsverarbeitungseinheit (14), welche dazu geeignet ist, ausgehend von dem bearbeiteten Detektionskennfeld eine oder mehrere Spuren zu erzeugen,
wobei das System **dadurch gekennzeichnet ist, dass** die mindestens eine Zwischenverarbeitungseinheit eine Zwischeneinheit zur Entrauschung (20) ist, welche dazu geeignet ist, ein Detektionskennfeld zu einem momentanen Zeitpunkt zu bearbeiten, um ein entrauschtes Detektionskennfeld zum momentanen Zeitpunkt als bearbeitetes Detektionskennfeld zu erlangen, wobei die Zwischeneinheit zur Entrauschung (20) nacheinander aufweist:
- ein Modul zur Strukturierung von Daten (22), welches dazu geeignet ist, einen Eingangstensor (TE(t)) mit einer Mehrzahl von Detektionskennfeldern, welche das Detektionskennfeld zum momentanen Zeitpunkt (C(t)) und mehrere Detektionskennfelder zu vor dem momentanen Zeitpunkt liegenden Zeitpunkten (C(t-1), ..., C(t-k+1)) aufweisen, zu assoziieren,
- eine Faltungs-Autocodier-Einrichtung (24), welche dazu geeignet ist, charakteristische Signaturen von realen Zielen in dem Eingangstensor zu identifizieren und am Ausgang eine entrauschte Detektionskarte (M(t)) zu erzeugen, und
- ein Bereinigungsmodul (26), welches dazu eingerichtet ist, das Detektionskennfeld zum momentanen Zeitpunkt mit der entrauschten Detektionskarte zu filtern, um die entrauschte Detektionskarte zum momentanen Zeitpunkt (CN(t)) zu erlangen,
und dadurch, dass das Modul zur Strukturierung von Daten (22) dazu geeignet ist, für jedes Detektionskennfeld (C(t), C(t-1), ..., C(t-k+1)) der Mehrzahl von Detektionskennfeldern das Kennfeld zu diskretisieren, um eine Detektionskarte (CD(t), CD(t-1), ..., CD(t-k+1)) zu erlangen, wobei ein Pixel der Detektionskarte den Einheitswert annimmt, wenn die Koordinaten von mindestens einer Detektion des Detektionskennfelds sich im Inneren des Pixels befinden, und ansonsten den Wert Null annimmt, und dazu geeignet ist, die Mehrzahl von so erhaltenen Detektionskarten gemäß einer zeitlichen Dimension (T) zu überlagern, um den Eingangstensor (TE(t)) zu erzeugen.

2. System gemäß dem Anspruch 1 oder dem Anspruch 1, wobei die Mehrzahl von Detektionskennfeldern k Detektionskennfelder aufweist, wobei k eine ganze Zahl zwischen 3 und 15, bevorzugt zwischen 4 und 10, insbesondere gleich 5, ist.

3. System gemäß einem der Ansprüche 1 bis 2, wobei die Faltungs-Autocodier-Einrichtung (24) aufweist:
eine erste neuronale Schicht (32), einbeziehend:
- einen Filterblock (42), welcher eine Mehrzahl von Faltungsfiltern umsetzt, wobei die Mehrzahl von Faltungsfiltern F Faltungsfilter aufweist, wobei F eine ganze Zahl zwischen 4 und 64, bevorzugt zwischen 8 und 32, insbesondere gleich 16, ist, und
- einen Aktivierungsblock, welcher vorzugsweise die Aktivierungsfunktion ReLU umsetzt, zum Erzeugen einer Mehrzahl von Signaturkarten (CS₁(t), ..., CS_{F}(t)), wobei die Mehrzahl von Signaturkarten F Signaturkarten aufweist, und
eine zweite neuronale Schicht (34), einbeziehend:
- einen Überlagerungsblock (52), welcher einen Kombinationsfilter umsetzt, welcher das Kombinieren der Mehrzahl von Signaturkarten erlaubt, und
- einen Aktivierungsblock (54), welcher vorzugsweise eine Sigmoid-Aktivierungsfunktion umsetzt, zum Erzeugen der entrauschten Detektionskarte (M(t)).

4. System gemäß dem Anspruch 3, wobei die unterschiedlichen Faltungsfilter der Mehrzahl von Faltungsfiltern eine identische Größe aufweisen, wobei die Länge eines Faltungsfilters entlang der zeitlichen Dimension (T) gleich der Länge des Eingangstensors (TE(t)) entlang der zeitlichen Dimension (T) ist, so dass eine Signaturkarte (CS₁(t), ..., CS_{F}(t)) die Dimensionalität einer Detektionskarte (C(t), ..., C(t-k+1)) aufweist.

5. System gemäß einem der Ansprüche 1 bis 4, wobei die Bereinigungseinheit (26) eine logische Kombination des Detektionskennfelds zum momentanen Zeitpunkt (C(t)) mit der entrauschten Detektionskarte (M(t)), welche aus dem Detektionskennfeld zum momentanen Zeitpunkt (C(t)) hergeleitet wird, durchführt, um das entrauschte Detektionskennfeld (CN(t)) zu erhalten.

6. System gemäß einem der Ansprüche 1 bis 5, wobei ein Detektionskennfeld mindestens eine Dimension aufweist, die entspricht: einer Entfernung, einem Winkel, einer relativen Radialgeschwindigkeit, einer Phase des Radarsignals oder jeglichem anderen Maß eines kinematischen Zustands eines Ziels, d.h., welches mit den Positionskoordinaten, der Geschwindigkeit oder der Beschleunigung des Ziels in Zusammenhang steht.

7. System gemäß einem der Ansprüche 1 bis 6, aufweisend eine Rückführungsschleife, welche das dynamische Anpassen eines Detektionsschwellenwerts der Detektionsverarbeitungseinheit (12) auf Grundlage der Spuren am Ausgang der Verfolgungsverarbeitungseinheit (16) erlaubt.

8. System gemäß einem der Ansprüche 1 bis 7, **dadurch gekennzeichnet, dass** zumindest die Verarbeitungseinheit zur Entrauschung (20) aus der angepassten Programmierung eines Computers resultiert.

9. Verfahren zur Entrauschung eines Detektionskennfelds zum momentanen Zeitpunkt (C(t)), wobei das Verfahren durch ein Radarverarbeitungssystem (10) gemäß einem der Ansprüche 1 bis 8 durchgeführt wird, wobei das Detektionskennfeld zum momentanen Zeitpunkt (C(t)) durch eine Detektionsverarbeitungseinheit (12) aus einem durch ein Antennenradar gelieferten Radarsignal erzeugt wird, wobei das Verfahren die Schritte aufweist, welche bestehen aus:
- Assoziieren, mittels eines Moduls zur Strukturierung von Daten (22), eines Eingangstensors (TE(t)) mit einer Mehrzahl von Detektionskennfeldern, welche das Detektionskennfeld zum momentanen Zeitpunkt (C(t)) und mehrere Detektionskennfelder zu vor dem momentanen Zeitpunkt liegenden Zeitpunkten (C(t-1), ..., C(t-k+1)) aufweisen,
- Identifizieren, mittels einer Faltungs-Autocodier-Einrichtung (24), von charakteristischen Signaturen von realen Zielen in dem Eingangstensor und Erzeugen einer entrauschten Detektionskarte (M(t)) am Ausgang, und
- Filtern, mittels eines Bereinigungsmoduls (26), des Detektionskennfelds zum momentanen Zeitpunkt (C(t)) mit der entrauschten Detektionskarte (M(t)), um eine entrauschte Detektionskarte (CN(t)) zu erlangen, wobei die entrauschte Detektionskarte dazu bestimmt ist, auf den Eingang einer Verfolgungsverarbeitungseinheit (14) aufgebracht zu werden.

## Claims

1. Radar treatment system (10) comprising:
- a detection treatment unit (12) which is able to produce, from a radar signal delivered by a radar antenna, a detection mapping;
- at least one intermediate treatment unit which is able to produce, from the detection mapping, a treated detection mapping; and
- a tracking treatment unit (14) which is able to produce, from the treated detection mapping, one or more tracks,
the system being **characterised in that** said at least one intermediate treatment unit is an intermediate denoising unit (20) which is able treat a detection mapping at a current instant in order to obtain a denoised detection mapping at the current instant as treated detection mapping, the intermediate denoising unit (20) comprising successively:
- a data structuring module (22) which is able to associate an input tensor (TE(t)) with a plurality of detection mappings comprising the detection mapping at the current instant (C(t)) and a plurality of detection mappings at instants prior to the current instant (C(t-1), ... , C(t-k+1));
- a convolutive auto-encoder (24) which is able to identify, in the input tensor, characteristic signatures of actual targets, and to produce at output a denoised detection map (M(t)); and
- a cleaning module (26) which is able to filter the detection mapping at the current instant with the denoised detection map in order to obtain the denoised detection map at the current instant (CN(t)),
and **in that** the data structuring module (22) is able, for each detection mapping (C(t), C(t-1), ... , C(t-k+1)) of the plurality of detection mappings, to render discrete said mapping in order to obtain a detection map (CD(t), CD(t-1), ... , CD(t-k+1)), a pixel of the detection map taking the unit value when the coordinates of at least one detection of the detection mapping is situated inside said pixel, and otherwise the value zero; and is able to superimpose, according to a temporal dimension (T), the plurality of detection maps thus obtained in order to construct the input tensor (TE(t)).

2. System according to claim 1 or claim 1, in which the plurality of detection mappings comprises k detection mappings, k being an integer between 3 and 15, preferably between 4 and 10, in particular equal to 5.

3. System according to any of claims 1 to 2, in which the convolutive auto-encoder (24) comprises:
a first layer of neurons (32) which integrates:
- a filtering block (42) which implements a plurality of convolutive filters, the plurality of convolutive filters comprising F convolutive filters, F being an integer between 4 and 64, preferably between 8 and 32, in particular equal to 16; and
- an activation block which preferably implements the activation function ReLU in order to generate a plurality of signature maps (CS₁(t), ... CS_{F}(t)), said plurality of signature maps comprising F signature maps, and
a second layer of neurons (34) which integrates:
- a superimposition block (52) which implements a combination filter allowing combination of the plurality of signature maps; and
- an activation block (54) which preferably implements the "sigmoid" activation function,
in order to generate the denoised detection map (M(t)).

4. System according to claim 3, in which the various convolutive filters of the plurality of convolutive filters have an identical size, the length of a convolutive filter according to the temporal dimension (T) being equal to the length of the input tensor (TE(t)) according to the temporal dimension such that a signature map (CS₁(t), ... CS_{F}(t)) has the dimensionality of a detection map (C(t), ... C(t-k+1)).

5. System according to any of claims 1 to 4, in which the cleaning unit (26) produces a logic combination of the detection mapping at the current instant (C(t)) with the denoised detection map (M(t)) derived from the detection mapping at the current instant (C(t)) in order to obtain the denoised detection mapping ((CN(t)).

6. System according to any of claims 1 to 5, in which a detection mapping comprises at least one dimension corresponding to: a distance, an angle, a relative radial speed, a phase of the radar signal or any other measure of a kinematic state of a target, i.e. connected to the position, speed or acceleration coordinates of said target.

7. System according to any of claims 1 to 6, comprising a feedback loop which allows dynamic adaptation of a detection threshold of the detection treatment unit (12) from tracks at the output of the tracking treatment unit (16).

8. System according to any of claims 1 to 7, **characterised in that** at least one denoising treatment unit (12) results from the adapted programming of a computer.

9. Method of denoising a detection mapping at the current instant (C(t)), said method being implemented by a radar treatment system (10) according to any of claims 1 to 8, the detection mapping at the current instant (C(t)) being produced by a detection treatment unit (12) from a radar signal delivered by a radar antenna, the method comprising the steps consisting of:
- associating, by means of a data structuring module (22), an input tensor (TE(t)) with a plurality of detection mappings comprising the detection mapping at the current instant (C(t)) and a plurality of detection mappings at instants prior to the current instant (C(t-1), ... , C(t-k+1));
- identifying, by means of a convolutive auto-encoder (24), in the input tensor, characteristic signatures of actual targets, and producing at the output a denoised detection map (M(t)); and
- filtering, by means of a cleaning module (26), the detection mapping at the current instant (C(t)) with the denoised detection map (M(t)) in order to obtain a denoised detection map (CN(t)), the denoised detection map being intended to be applied at the input of a tracking treatment unit (14).
